# EUROPÄISCHE PATENTANMELDUNG

(11) **EP 1 211 112 A1**
(43) Veröffentlichungstag der Anmeldung: **05.06.2002**
(21) Anmeldenummer: 01127193.9
(22) Anmeldetag: 16.11.2001
(51) Int. Cl.: B60J 1/20

(54) **Fensterrollo mit variabler Abschattungswirkung**

(30) Priorität: 22.11.2000 DE 10057764
(71) Anmelder: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Patentanwälte Rüger, Barthelt & Abel

(57) **Zusammenfassung**

Ein Fensterrollo (12) ist mit Rollobahnmitteln (28,37) versehen, die im ausgefahrenen Zustand jeweils unterschiedliche Grade der Lichtdurchlässigkeit an dem Fenster ermöglichen. Hierzu können die beiden Rollobahnen (28,37) entweder auf getrennte Wickelwellen (25,26) aufgewickelt sein und sich gleichsinnig von demselben Ursprungsort aus ausbreiten oder die beiden Rollobahnen (28,37) sind aneinander angesetzt und werden nach dem Aufspannen nach Art eines Films vor dem Fenster bewegt. In beiden Fällen werden zwei Wickelwellen (25,26) verwendet, wobei in einem Falle die beiden Wickelwellen (25,26) unmittelbar nebeneinander gelagert sind, während im anderen Falle die Wickelwellen (25,26) beim Aufspannen des Rollos voneinander separiert werden.

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet. Aus der DE 36 12 165 A1 ist ein Heckfensterrollo bekannt, das eine in einem Sockel drehbar gelagerte Wickelwelle aufweist. Der Sockel befindet sich auf oder unterhalb der Hutablage. Die Rollobahn des Heckfensterrollos wird von der Hutablage in Richtung auf die Dachhinterkante ausgezogen. Zum Verstauen der nicht benötigten Rollobahn dient die in dem Sockel drehbar gelagerte Wickelwelle, die durch einen Federmotor im Aufwickelsinne vorgespannt ist. An der von der Wickelwelle abliegenden Kante der Rollobahn ist eine Zugschiene befestigt. Die Zugschiene wird mit Hilfe zweiter Schwenkhebel aus einer Lage, in der sie der Wickelwelle unmittelbar benachbart ist, in eine Lage überführt, in der die Rollobahn nahezu das gesamte Fenster abdeckt. Die Schwenkhebel sind zu diesem Zwecke in Richtung senkrecht zu jener Ebene im wesentlichen biegesteif, in der sie sich beim Ein- bzw. Ausfahren des Rollos bewegen.

Mit dem bekannten Rollo sind nur zwei Einstellung des Lichtdurchtritts durch die Heckscheibe möglich. Im einen Zustand kann das Licht ungehindert durch die Heckscheibe eintreten, weil die Rollobahn vollständig auf der Wickelwelle aufgewickelt ist, während im anderen Zustand eine Abschwächung entsprechend der Lichtdurchlässigkeit der Rollobahn stattfindet.

Es ist ferner bekannt, seitlich neben dem Heckfenster zwei Führungsschienen anzubringen, in denen der Zugstab der Rollobahn endseitig geführt ist. Der Zugstab ist längenverstellbar, um der unterschiedlichen Fensterbreite folgen zu können. Die Betätigung geschieht durch die in den Führungsschienen laufende Schubglieder.

Auch hierbei sind nur zwei Zustände möglich, nämlich ungehinderter Lichtdurchtritt oder eine Abschwächung entsprechend der Abschwächungswirkung der Rollobahn.

Ausgehend hiervon ist es Aufgabe der Erfindung ein Fensterrollo für Kraftfahrzeuge zu schaffen, das insgesamt drei Betriebszustände ermöglicht, wobei in jedem Betriebszustand eine andere Abschwächung des Lichtdurchtritts über der gesamten Fensterfläche einstellbar ist.

Diese Aufgabe wird erfindungsgemäß mit dem Fensterrollo mit dem Merkmal des Anspruches 1 gelöst.

Mit dem erfindungsgemäßen Fensterrollo ist es möglich, zusätzlich zu dem völlig unbeeinflussten Lichteintritt wenigstens zwei zusätzliche Abschattungszustände zu erreichen.

Diese unterschiedlichen Zustände können mit Rollobahnmitteln erreicht werden, die zwei Rollobahnen umfassen, die alternativ und/oder gleichzeitig aufgespannt werden können.

Bei der einen Ausführungsform sind die Rollobahnen der Rollobahnmittel längs einer Kante miteinander verbunden, so dass entweder überhaupt keine Rollobahn oder die eine oder andere Rollobahn vor das Fenster gezogen werden können. Die andere Variante sieht zwei voneinander getrennte Rollobahnen vor, die weitgehend unabhängig voneinander zu betätigen sind.

Eine der Rollobahnen kann aus einem Gewirk oder einer gelochten Folie bestehen, um dosiert Licht in das Wageninnere zu lassen. Die andere Rollobahn kann vollständig dunkel oder auch beispielsweise mit einer metallisierten Schicht versehen sein, um die Infraroteinstrahlung in das Wageninnere vollständig abzusperren. Darüber hinaus hat die undurchsichtige Rollobahn den Vorteil, den Einblick in das Fahrzeuginnere zu unterbinden, was insbesondere bei geparkten Fahrzeugen von Vorteil ist.

Den Rollobahnmitteln sind Führungsmittel zugeordnet, um die Rollobahnmittel im aufgespannten Zustand zu halten. Diese Führungsmittel können in Führungsschienen bestehen, oder in Schwenkhebeln. Die Variante mit Führungsschienen gestattet es, das Fenster weitestgehend abzudecken. Hierzu verlaufen seitlich neben den Fensterrändern zwei Führungsschienen, die der Kontur des Fensters folgen. In diesen Führungsschienen läuft wenigstens eine Zugstange, an der mit einer Kante die betreffende Rollobahn befestigt ist.

Bei der Ausführungsform mit zwei unabhängigen Rollobahnen enthalten die Führungsschienen an jeder Seite zwei Führungsnuten, wobei eine Führungsnut jeder Führungsschiene der einen und die andere Führungsnut der anderen Rollobahn zugeordnet ist.

Damit die Zugschienen der trapezförmigen oder konvergierenden Gestalt folgen können, ist die jeweilige Zugschiene längenveränderlich ausgebildet.

Das Ein- und Ausfahren der betreffenden Rollobahn kann erfolgen, indem die betreffende Zugschiene durch einen Elektromotor angetrieben wird. Hierzu sind Schub- oder-Druckglieder vorgesehen, die vom Motor in Bewegung gesetzt werden und die Enden der jeweiligen Zugschiene in der Führungsnut bewegen. Zweckmäßiger Weise sind die Rollobahnen durch Federmotoren im Sinne eines Einziehens vorgespannt.

Auch die Variante mit zwei Rollobahnen läßt sich sehr einfach, mit nur einem einzigen Motor steuern. Hierbei wird das linienförmige Druckglied an einem Ende mit der Zugschiene der einen Rollobahn und am anderen Ende mit der Zugschiene der anderen Rollobahn gekoppelt. Mit anderen Worten, das Leertrum des Schubgliedes aus der Sicht einer Rollobahn ist gleichzeitig das Arbeitstrum aus der Sicht der anderen Rollobahn. Auf diese Weise wird eine Kreuzkopplung erreicht, die dafür sorgt, dass in der Mittelstellung des Schubgliedes beide Rollobahnen eingefahren sind. Wird das Schubglied zu der einen Richtung ausgefahren, wird die eine Rollobahn aufgespannt, während beim Ausfahren in der entgegengesetzten Richtung die andere Rollobahn herausgezogen wird. In der Mittelstellung sind beide Rollobahnen eingefahren.

Die Schub- oder Druckglieder sind vorzugweise angenähert zylindrische Gebilde, die auf der Außenseite mit einer Verzahnung versehen sind. Durch die angenäherte Rotationssymmetrische Gestaltung können Bogenführungen ohne weiteres überwunden werden. Ein solches Schubglied wird erhalten, wenn eine im wesentlichen zylindrische Seele auf der Außenseite mit einer schraubenförmig verlaufenden Rippe versehen ist. Derartige Schubglieder sind unter dem Handelsnamen Suflexwelle™ aus der Praxis bekannt.

Die Betätigung der einzelnen Rollobahnen wird einfach, wenn für jede Rollobahn eine eigene Wickelwelle vorgesehen ist. Jede der Wickelwellen ist durch einen eigenen Federmotor im Sinne des Aufwickeins der betreffenden Rollobahn vorgespannt.

Um ein Schiefziehen der Rollobahn zu vermeiden, der zu schräg verlaufenden Wellen in der Rollobahn führt, ist es zweckmäßig, wenn die betreffende Wickelwelle in einem Bügel gelagert ist, der seinerseits wieder bezüglich der Antriebseinrichtung bzw. der Führungsschienen schwenkbar ist, und zwar um eine Achse, die senkrecht zu der Achse der Wickelwelle steht. Mittels einer solchen Lagerung läßt sich ein Versatz kompensieren, der entsteht, wenn die Schubglieder in den betreffenden Führungsschienen nicht auf exakt derselben Wirkhöhe stehen. Unter Wirkhöhe wird hierbei der wirksame Abstand verstanden, den das Ende des Schubgliedes von der Achse der Wickelwelle aufweist. Unterschiedliche Wirkhöhen würden bedeuten, dass die Zugschiene der betreffenden Rollobahn an einer Kante auf einen größeren effektiven Abstand von der Wickelwelle gezwungen wird als an der anderen Kante, wodurch die Rollobahn in sich verzogen wird und zum Faltenwurf neigt.

Die Möglichkeit unterschiedliche Abschattungsgrade zu erreichen, kann auch, wie bereits eingangs gesagt, mit Hilfe von Schwenkhebeln erzeugt werden. Die Schwenkhebel können entweder einfache starre Hebel oder Kniehebel sein. In jedem Falle sind die Hebel einends in der Nähe der Wickelwelle um Achsen schwenkbar gelagert, die zu der Achse der Wickelwelle rechtwinklig verläuft.

Mit Hilfe der Schwenkhebel wird eine Auszugsstange von der Wickelwelle weg oder zu ihr hin bewegt, an der eine weitere Wickelwelle drehbar gelagert ist. Die Rollobahnmittel bestehen hierbei aus zwei in Bewegungsrichtung hintereinander befestigten Rollobahnen, die ähnlich einem Film in einer Kamera zwischen den beiden Wickelwellen hin und her bewegt werden. Bei der letzt genannten Möglichkeit muss die vorauseilende Rollobahn einen rechteckigen Zuschnitt aufweisen, damit sie vollständig auf die jeweilige Wickelwelle aufgewickelt werden kann, die an der Zugstange gelagert ist. Die Zugstange ist in der Regel wegen der trapezförmigen Fenstergeometrien deutlich kürzer als es der Breite des Fensters im unteren Bereich entspricht. Lediglich die zweite Rollobahn kann auf die trapezförmige Fenstergestalt abgestimmt sein.

Im übrigen sind Weiterbildungen der Erfindung Gegenstand von Unteransprüchen. Dabei sollen auch solche Merkmale in Kombination als beansprucht angesehen werden, für die es kein spezielles Ausführungsbeispiel gibt.

In der Zeichnung sind Ausführungsbeispiele des Gegenstands der Erfindung dargestellt. Es zeigen:
- Fig. 1: einen Pkw in einer Rückansicht, unter Veranschaulichung eines erfindungsgemäßen ausgezogenen Heckscheibenrollos,
- Fig. 2: den prinzipiellen Aufbau des Heckscheibenrollos nach Fig. 1,
- Fig. 3: die Führungsschiene des Heckscheibenrollos nach Fig. 1, in einem Querschnitt,
- Fig. 4: die Lagerung der Wickelwellen des Heckscheibenrollos nach Fig. 1, in einer schematisierten vereinfachten Darstellung,
- Fig. 5: den Antrieb des Heckscheibenrollos nach Fig. 1, in einer einfachen schematisierten Darstellung,
- Fig. 6: einen Pkw in einer perspektivischen Heckansicht unter Veranschaulichung eines anderen Ausführungsbeispiels des erfindungsgemäßen Heckfensterrollos,
- Fig. 7: das Heckfensterrollo nach Fig. 6, in einer perspektivischen Übersichtsdarstellung und
- Fig. 8: die Antriebseinrichtung des Heckfensterrollos nach Fig. 6 in einer stark schematisierten perspektivischen Darstellung, und
- Fig. 9: eine Weiche zum Zusammenführen der Führungsnuten des Fensterrollos nach Fig. 2, in einer stark schematisierten Darstellung.

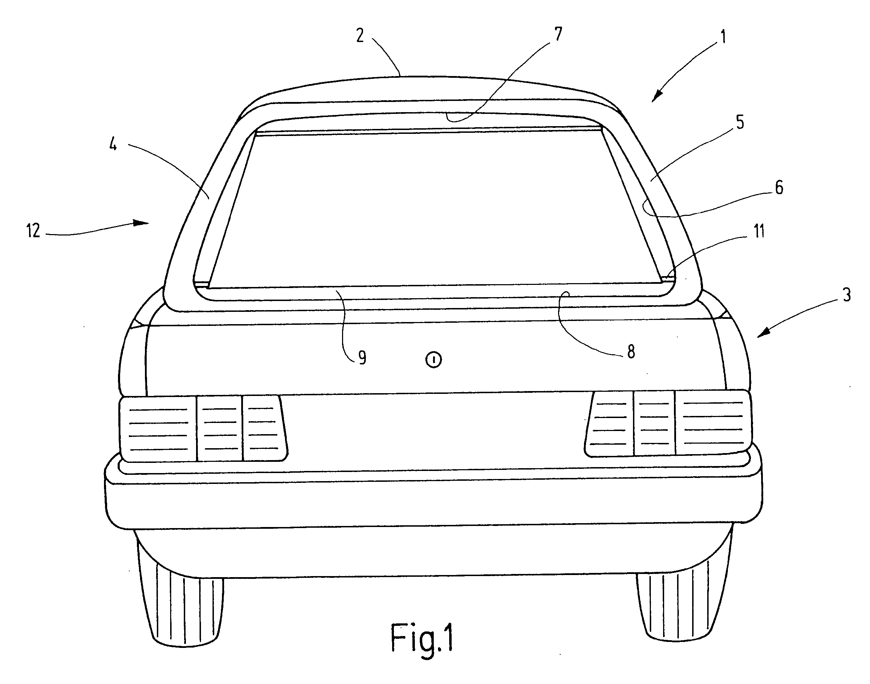

Fig. 1 zeigt in einer schematischen Darstellung die Rückansicht eins Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterbrüstung 8 grenzen. In der Heckfensteröffnung 6 sitzt in bekannter Weise, beispielsweise mittels Fenstergummi eingeklebt, eine Heckscheibe.

Im Inneren des Pkw 1 befindet sich vor der Innenseite der Heckscheibe eine Hutablage 9, die sich zwischen der Fensterunterkante 8 und einer in der Figur nicht erkennbaren Rücksitzlehne horizontal erstreckt. In der Hutablage 9 verläuft ein gerader Auslaufschlitz 11.

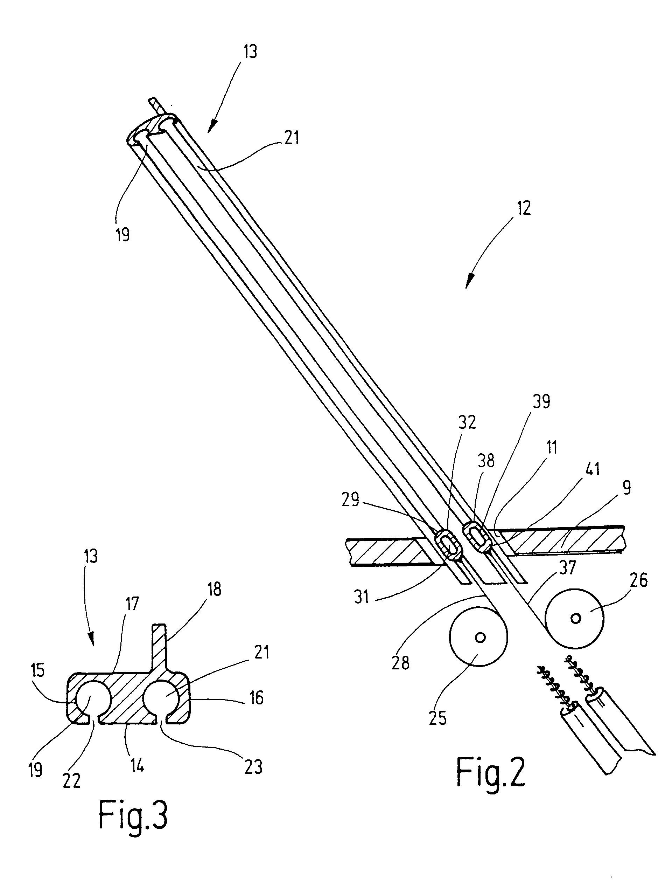

Der Auslaufschlitz 11 gehört zu einem Heckfensterrollo 12, dessen prinzipieller Aufbau in Fig. 2 stark schematisiert in einer Seitenansicht veranschaulicht ist.

Das Heckfensterrollo 12, weist zwei Führungsschienen auf, die neben den seitlichen Rändern der Heckfensteröffnung 7 an den beiden C-Säulen 4 und 5 befestigt ist. Wegen der aufgeschnittenen Prinzipdarstellung ist in Fig. 2 lediglich eine Führungsschiene 13 zu erkennen, die beispielsweise an der C-Säule 5 befestigt ist.

Die Führungsschiene 13 weist das in Figur 3 gezeigte Querschnittsprofil auf. Sie ist im Querschnitt im Wesentlichen rechteckig und wird von einer Vorderseite 14, zwei seitlichen Wänden 15 und 16 sowie einer Rückseite 17 begrenzt. Von der Rückseite 17 geht ein leistenartiger Befestigungsflansch 18 aus, mit dessen Hilfe die Führungsschiene 13 an entsprechenden Karosserieteilen zu befestigen ist.

In der Führungsschiene 13 sind parallel nebeneinander zwei im Querschnitt kreisförmige Führungsnuten 19 und 21 enthalten, die sich über Schlitze 22 und 23 zu der Vorderseite 14 hin öffnen. Die beiden Führungsnuten 19 und 21 sind im Querschnitt identisch und verlaufen längs der Führungsschiene 13 parallel mit gleichem Abstand.

Die Führungsschiene 13 besteht beispielsweise aus einem Aluminiumstrangpressprofil.

Da der Schlitz 22 bzw. 23 schmäler ist als der Durchmesser des kreisförmigen Abschnitts der Führungsnuten 19 bzw. 21, entstehen hinterschnittene Nuten, die geeignet sind ein linienförmiges Schubglied gegen Ausknicken zu schützen und das Schubglied bei entsprechendem Durchmesser daran zu hindern, durch den Schlitz 22 bzw. 23 nach außen auszutreten.

Die Führungsschienen 13 sind bzgl. mehrerer Achsen gebogen, damit sie der Kontur der Fensterkante folgen ohne in dem Fenster selbst sichtbar zu werden. Die Führungsschienen 13 sind so angeordnet, dass die Nuten 19 und 21 bezogen auf die Längserstreckung des Fahrzeugs hintereinander liegen, d.h. sie liegen bezogen auf einen Vertikalschnitt durch das Fahrzeug, der der Fahrzeuglängsachse folgt, nebeneinander, womit die eine Führungsnut zu dem Kofferraum 3 und die andere Führungsnut mehr zum Fahrzeuginneren hin gelegen ist.

Die Führungsschienen 13 reichen nach unten, wie Figur 2 erkennen läßt, durch den Schlitz 11 bis unterhalb der Hutablage 9.

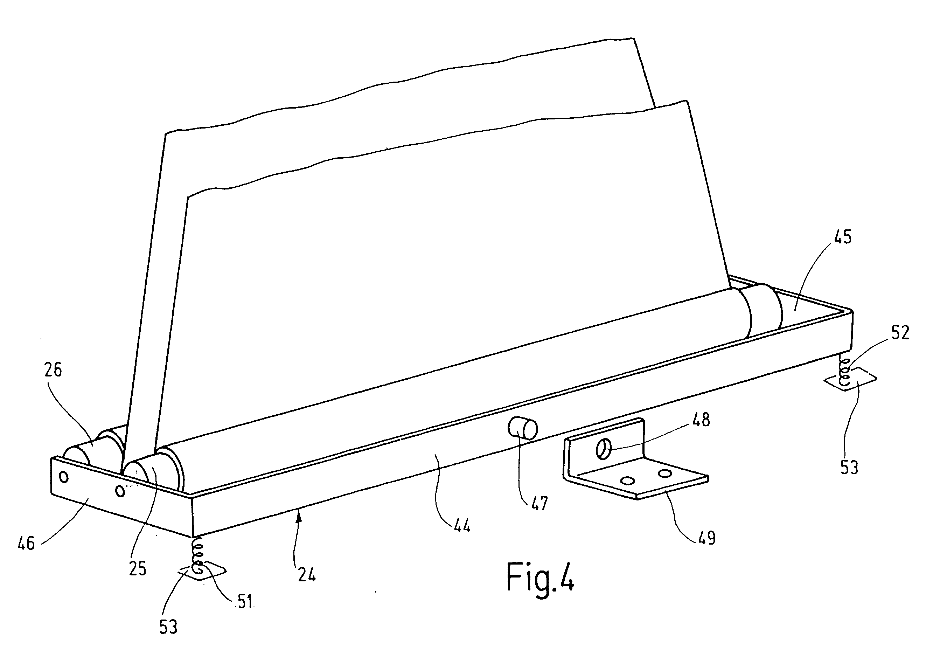

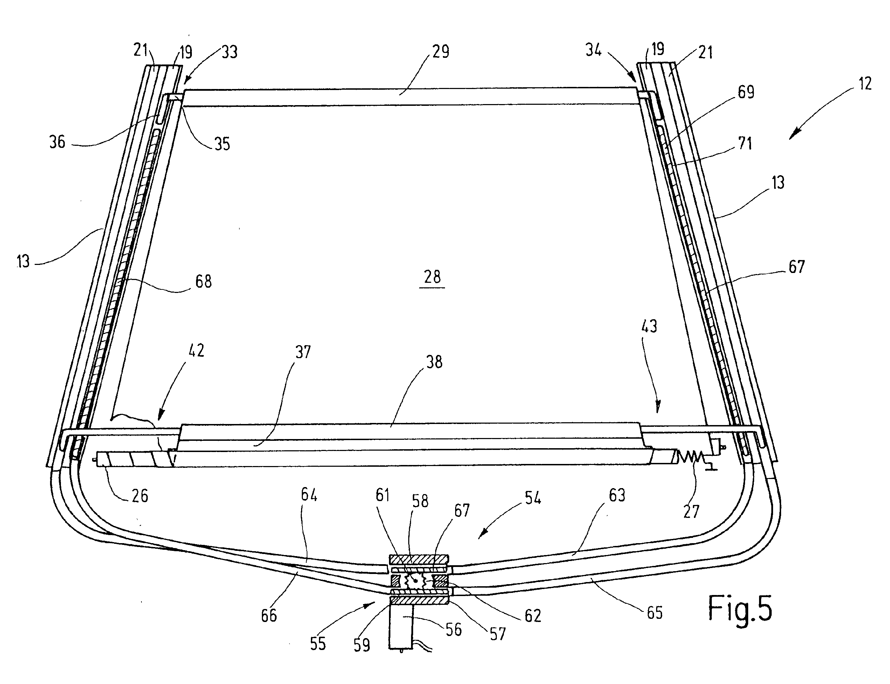

Unterhalb der Hutablage 9 sind, wie Figur 4 zeigt, in einem Lagerbügel 24 zwei gegensinnig wickelnde Wickelwellen 25 und 26 drehbar gelagert. Jede der Wickelwellen 25 und 26 ist rohrförmig und beherbergt einen Federmotor. Für die Wickelwelle 26 ist dieser Federmotor bei 27 in Figur 5 schematisch dargestellt. Der Federmotor 27 besteht aus einer Schraubenfeder, die mit einem Ende im Inneren der betreffenden Wickelwelle festgelegt ist und anderenends an dem Lagerbügel 24 verankert ist.

An der Wickelwelle 25, die dem Wageninneren zu gelegen ist, ist mit einer Kante eine Rollobahn 28 befestigt, deren Zuschnitt eine trapezförmige Annäherung der Kontur des Heckfensters 6 ist. Die von der Wickelwelle 25 abliegende Kante ist zu einer schlauchförmigen Schlaufe 29 geformt, in der ein Zugstab 31 sitzt. Der Zugstab 31 besteht aus einem formsteifen Rohr 32, in das zwei L-förmige Führungsglieder 33 und 34 von beiden Enden her eingesteckt sind, wie dies Figur 5 veranschaulicht.

Das Führungsglied 33 besteht aus einem langen, in dem formsteifen Rohr 32 verschieblichen Schenkel 35 und einem L-förmig abgewinkelten Schenkel 36. Der Schenkel 35 ist an den Querschnitt des formsteifen Rohres 32 angepasst und so bemessen, dass er durch den Schlitz 22 bzw. 23 in das Innere der betreffenden Führungsnut 19 oder 21 reichen kann. Der Schenkel 36 dagegen ist an den Querschnitt des kreisförmigen Teils der Führungsnut 19 oder 21 angepasst. Auf diese Weise ist der Schenkel 35 in dem formsteifen Rohr 32 längsverschieblich und der Schenkel 36 kann entlang der betreffenden Führungsnut 19, 21 laufen. Er ist seitlich nicht aus dem Schlitz 22, 23 herausziehbar.

Das Führungsglied 34 hat den gleichen Aufbau wie das Führungsglied 33, so dass sich eine neue Erläuterung insoweit erübrigt.

An der Wickelwelle 26 ist eine weitere Rollobahn 37 einends angebracht, die ebenfalls an ihrer von der Wickelwelle 26 abliegenden Kante eine Schlaufe 38 bildet. In der Schlaufe 38 sitzt eine längenverstellbare Zugschiene 39, bestehend aus einem formsteifen Rohr 41, dessen Länge der Kante entspricht und in der zwei Führungsglieder 42 und 43 geführt sind, die denselben Aufbau aufweisen, wie dies im Zusammenhang mit dem Führungsglied 33 ausführlich erläutert ist.

Die Rollobahnen 28 und 37 laufen zwischen den Wickelwellen 25, 26 ab.

Der Lagerbügel 24 zur Lagerung der beiden Wickelwellen 25 und 26 ist ein U-förmiges Gebilde mit einem Rückenteil 44 und zwei rechtwinklig davon ausgehenden Schenkeln 45 und 46, in denen die Wickelwellen 25 und 26 mit entsprechenden Lagerzapfen drehbar gelagert sind.

In der Mitte des Rückenabschnittes 44, befindet ein Lagerzapfen 47, dessen Achse rechtwinklig zu der Achse der beiden zueinander achsparallelen Wickelwellen 25 und 26 verläuft. Der Lagerzapfen 25 sitzt in einer Lagerbohrung 48 eines Halters 49, der unterhalb der Hutablage 9 in dem Fahrzeug fest verankert ist. Auf diese Weise können sich die beiden Wickelwellen 25 und 26 begrenzt bzgl. der Achse, definiert durch den Lagerzapfen 47, drehen.

Die mittlere Stellung, d.h. die zentrierte Stellung wird durch zwei Druckfedern 51 und 52 vorgegeben, die sich einends an dem Lagerbügel 24 und anderenends an einer karosseriefesten Auflage 53 abstützen die schematisch angegeben ist. Die beiden Federn 51 und 52 sitzen an der Übergangsstelle des Rückenteils 44 in den jeweiligen Schenkel 45 oder 46, so dass gleiche Drehmomente entstehen.

Um die Rollobahnen 28 und 37 auszufahren ist eine Antriebseinrichtung 54 vorgesehen, die in Figur 5 stark schematisiert gezeigt ist. Zur Vereinfachung der Darstellung und zur Erläuterung des Verständnisses der Erfindung sind die beiden seitlichen Führungsschienen 13 in Figur 5 gedreht veranschaulicht, in der Weise, dass die beiden Führungsnuten 19 und 21 nebeneinander in der Zeichenebene liegen. Diese Darstellung ist wie gesagt nur zur Erleichterung des Verständnisses vorgenommen worden. In Wahrheit liegen die beiden Führungsnuten 19 und 21 hintereinander und sie öffnen sich auch in Richtung aufeinander zu und nicht in Richtung auf den Betrachter.

Zu der Antriebseinrichtung 54 gehört ein Getriebemotor 55, der sich aus einem permanent erregten Gleichstrommotor 56 und einem Getriebegehäuse zusammensetzt. In dem Getriebegehäuse sind parallel zueinander zwei Führungskanäle 58 und 59 enthalten, zwischen denen auf einer Ausgangswelle 61 ein Ausgangszahnrad 62 vorgesehen ist. Das Ausgangszahnrad 62 kann über die damit drehfest verbundene Ausgangswelle 61 wahlweise in beiden Drehrichtungen in Gang gesetzt werden.

Von dem Führungskanal 58 geht ein Führungsrohr 63 zu dem unteren Ende der Führungsnut 19 in der rechten Führungsschiene 13. Ein weiteres Führungsrohr 64 verbindet das andere Ende des Führungskanals 58 mit dem unteren Ende der Führungsnut 21 in der linken Führungsschiene 13. Der Führungskanal 59 ist am rechten Ende über ein Führungsrohr 65 mit dem unteren Ende der Führungsnut 21 in der rechten Führungsschiene 13 und am linken Ende über ein Führungsrohr 66 mit dem unteren Ende der Führungsnut 19 in der Führungsschiene 13 verbunden. Sowohl durch den Führungskanal 58 als auch durch den Führungskanal 59 verläuft jeweils ein biegeelastisches Schubglied 67 bzw. 68. Die Länge der beiden Schubglieder 67 und 68 ist so bemessen, dass sie in der Neutralstellung gerade eben nicht in die zugehörige Führungsnuten 19 bzw. 21 hineinragen.

Die beiden Schubglieder 67 und 68 haben denselben Aufbau. Sie bestehen jeweils aus einer elastisch biegsamen Seele 69, der auf seiner Außenseite eine oder mehrere Rippen 71 trägt, die dort ein ein- oder mehrgängiges Gewinde bilden. Die Rippen 71 stehen radial vor und laufen schraubenförmig über die zylindrische Seele 69 von einem Ende des Schubglieds bis zum anderen Ende. Das Ausgangszahnrad 62 trägt eine Verzahnung, die zwischen die von den Rippen 71 gebildeten Nuten eingreifen kann. Auf diese Weise ist das Ausgangszahnrad 72 formschlüssig mit den Schubgliedern 67 und 68 gekuppelt.

Die Funktionsweise des beschriebenen Heckfensterrollos ist wie folgt:

In der Ruhestellung sind unter der Wirkung der entsprechenden Federmotoren 27 die Wickelwellen 25, 26 in eine Stellung gedreht, in der die Rollobahnen 28 und 37 aufgewickelt sind. In dieser Stellung befinden sich die schlauchartigen Schlaufen 29 und 38 in dem Auslaufschlitz 11, wie dies Figur 2 erkennen läßt. Die Führungsglieder 33, 34 und 42, 43 liegen in der Nähe der unteren Enden der beiden Führungsschienen 13, ohne dass jedoch die Schenkel 36 aus den zugehörigen Führungsnuten 19 und 21 freigekommen sind. Diese Stellung ist für die Führungsglieder 42 und 43 in Figur 5 gezeigt. Die Führungsglieder 33 und 34 nehmen eine ähnliche Stellung ein und würden, wenn sie in Figur 5 eingezeichnet wären, von den Führungsgliedern 42 und 43 verdeckt sein.

Gleichzeitig sind die beiden Schubglieder 68 und 69 mit ihren beiden Enden von den betreffenden Schenkeln 36 beabstandet.

Wenn der Benutzer ausgehend von dieser Stellung des Heckfensterrollos 12, in der der Lichteintritt in das Fahrzeuginnere überhaupt nicht beeinflusst wird, eine erste Abschattungswirkung erzeugen möchte, fährt er beispielsweise die Rollobahn 28 aus. Die Rollobahn 28 vermindert den Lichtdurchtritt ohne ihn vollständig zu unterbinden. Hierzu besteht die Rollobahn 28 beispielsweise aus einem offnen Kettengewirke, oder einer gelochten und schwarz eingefärbten Kunststofffolie.

Um die Rollobahn 28 auszufahren, wird der Getriebemotor 55 mit einer solchen Drehrichtung in Gang gesetzt, dass er das Schubglied 69 nach rechts durch die Führungsnut 19 bewegt. Da die beiden Schubglieder 68 und 69 an diametral gegenüberliegenden Seiten mit dem Ausgangszahnrad 62 kämmen, wird gleichzeitig das Schubglied 68 nach links durch die Führungsnut 19 und die linke Führungsschiene 13 vorgeschoben. Nach einem kurzen Stück des Vorschubwegs kommen die freien Enden der beiden Schubglieder 68 und 69 mit den unteren Enden der Schenkel 36 der beiden Führungsglieder 33 und 34 in Eingriff und schieben im weiteren Verlauf die Führungsglieder 33 und 34 in Richtung auf das obere Ende der beiden Führungsschienen 13.

Da sich der Abstand zwischen den Führungsschienen verändert, tauchen gleichzeitig teleskopartig die Schenkel 35 der Führungsglieder 33 und 34 in das in der betreffenden Schlaufe 29 enthaltene formsteife Rohr 33 der Zugschiene 31 ein.

Sobald die Endlage erreicht ist, wird der Getriebemotor 55 stillgesetzt. Der Getriebemotor 55 ist selbsthaltend und arretiert die Schubglieder 68 und 69 in der jeweils erreichten Stellung.

Das Abschalten des Getriebemotors 55 erfolgt mit Hilfe von Endschaltern oder indem die Führungsglieder 33 und 34 an Anschläge anlaufen, so dass ein in einer Elektronik auszuwertender Blockierstrom auftritt, der zum Abschalten führt.

Die Rollobahn 28 wird nunmehr zwischen der Zugschiene 31 und der betreffenden Wickelwelle 25 aufgespannt gehalten.

Zum Einfahren wird der Getriebemotor 55 mit der entgegengesetzten Drehrichtung in Gang gesetzt, so dass die beiden Führungsglieder 68 und 69 nach unten aus den zugehörigen Führungsschienen 13 heraus bewegt werden. Gleichzeitig läuft die Zugschiene 31 mit nach unten, weil durch die Wirkung des Federmotors 27 der Wickelwelle 25 die Rollobahn 28 ständig unter Spannung gehalten wird.

Sobald die Rollobahn 28 vollständig aufgewickelt ist, sind die Zugglieder 68 und 69 endseitig von den Führungsgliedern 33 und 34 freigekommen. Diese zentrierte Mittelstellung kann ebenfalls durch Endschalter erfasst werden und führt zum Stillsetzen des Getriebemotors 55.

Wenn der Getriebemotor 55 nach dem vollständigen Einfahren der Rollbahn 28 mit derselben Drehrichtung eingeschaltet bleibt, wird das Schubglied 69 in die Führungsnut 21 der linken Führungsschiene 13 und das Schubglied 68 in die Führungsnut 21 der rechten Führungsschiene 13 vorgeschoben. Da in den Führungsnuten 21 die Zugschiene 39 der anderen Rollobahn 37 geführt ist, wird nunmehr diese Zugschiene 39 von den beiden Schubgliedern 68 und 69 mitgenommen. Die Folge hiervon ist, dass jetzt die Rollobahn 37 vor dem Heckfenster 6 aufgespannt wird.

Die Rollobahn 37 zeigt eine andere Lichtdurchlässigkeit 28. Beispielsweise kann die Rollobahn 37 vollständig lichtundurchlässig sein, womit jeglicher Lichteintritt in das Fahrzeuginnere unterbunden ist. Eine solche Betriebsstellung ist insbesondere bei geparktem Auto von Vorteil, weil sich hierdurch das Aufheizen des Innenraums durch Lichteinstrahlung durch die Heckscheibe vollständig ausschließen läßt.

Die Wärmeeinstrahlung kann weiter vermindert werden, wenn die nach außen zeigende Seite der Rollobahn 37 zusätzlich metallisiert ist, um die Infrarotstrahlen zu reflektieren.

Das Einfahren der Rollobahn 37 geschieht in der sinngemäß umgekehrten Weise.

Da aufgrund von Montagetoleranzen nicht immer gewährleistet sein kann, dass die Schubglieder 68 und 69 die betreffende Zugschiene 31 oder 39 exakt parallel zu der betreffenden Wickelwelle 25 oder 26 anheben, kann eine Verkantung der betreffenden Zugschiene 32, 38 gegenüber der zugehörigen Wickelwelle 25, 26 auftreten. Ohne Gegenmaßnahmen würde die Verkantung zu schrägverlaufen Wellen oder Falten in der betreffenden Rollobahn führen. Weil jedoch die beiden Wickelwellen 25 und 26 schwenkbar in dem Lagerbügel 24 aufgenommen sind, kann sich die Wickelwelle begrenzt schräg und dann damit exakt parallel zu der betreffenden Zugschiene 32, 39 ausrichten. Schräg verlaufende Spannungen in der Rollobahn sind ausgeschlossen.

Mit Hilfe der beiden Federn 51 und 52 wird der Bügel in die zentrierte Lage vorgespannt. Ein Taumeln um die Querachse und somit ein Klappern während der Fahrt wird ausgeschlossen.

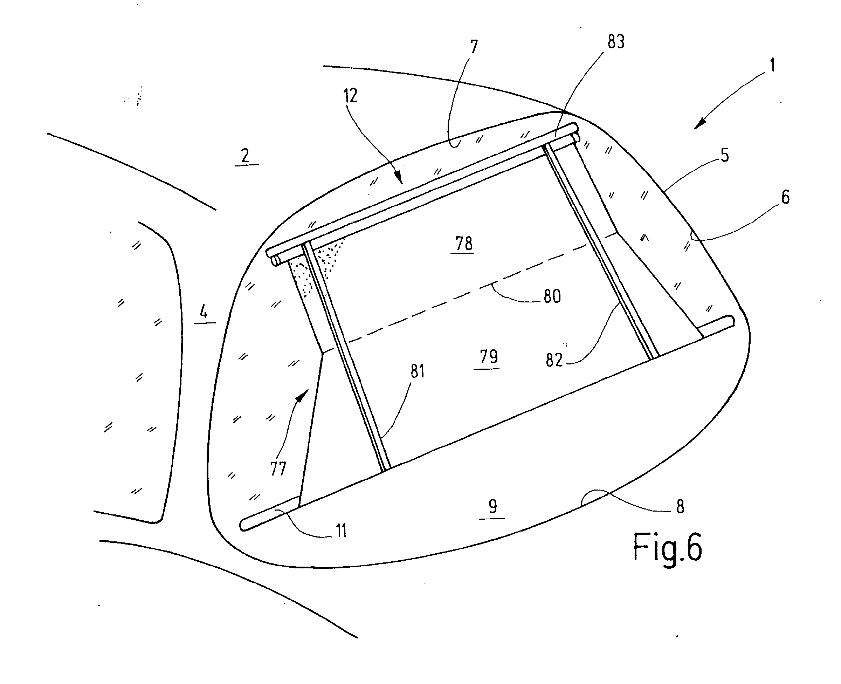

In den Figuren 6 und folgende ist ein weiteres Ausführungsbeispiel des Heckscheibenrollos 12 veranschaulicht. Soweit dort zwei bereits beschriebene Bauelemente wiederkehren, werden sie mit denselben Bezugszeichen belegt und nicht erneut erläutert.

Gemäß Fig. 6 gehört zu dem Heckscheibenrollo 12 ein Rollobahnmittel 77, das sich aus zwei Rollobahnen 78 und 79 zusammensetzt, die längs einer Verbindungslinie 80 miteinander verbunden sind. Die Rollobahn 78, die abschnittsweise zu erkennen ist, hat einen rechteckigen Zuschnitt, und ist stärker lichtdurchlässig, als der Rollobahnabschnitt 79, der trapezförmig zugeschnitten ist.

Mit Hilfe zweier Schwenkhebel 81 und 82 wird das Rollobahnmittel 77 aufgespannt gehalten. Die Schwenkhebel 81 und 82 greifen hierzu an einer Auszugsschiene 83 an.

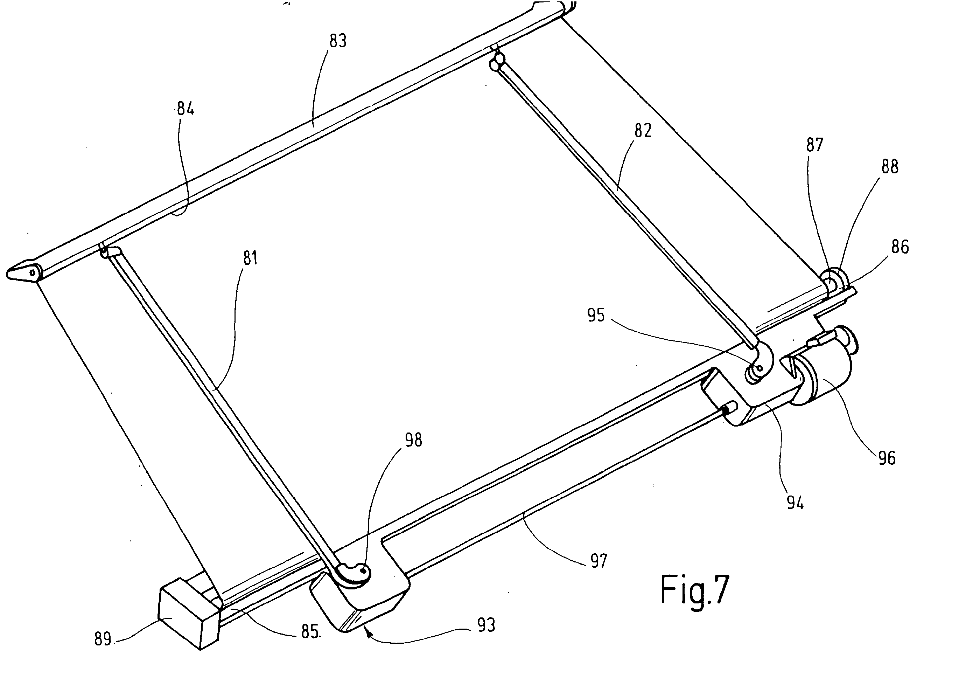

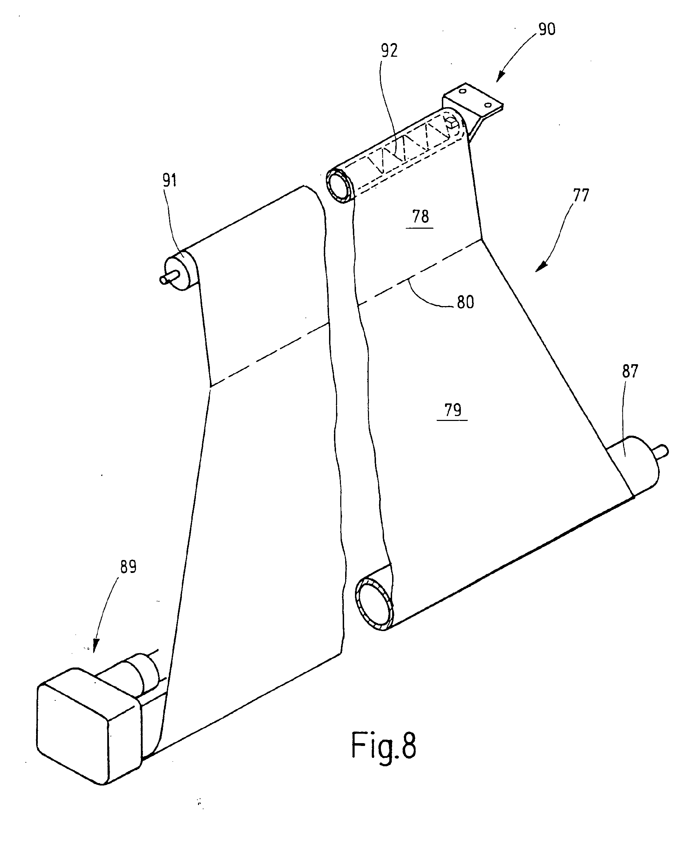

Die Figuren 7 und 8 zeigen im einzelnen den Aufbau des Heckscheibenrollos 12 nach Figur 6. Der Zugstab 83 ist mit einer nach unten offenen Nut 84 versehen, in die mit ihren freien Enden die beiden gegensinnig schwenkbaren Schwenkhebel 81 und 82 gleitend eingreifen. Die Schwenkhebel 81 und 82 bewegen sich beim Ein- und Ausfahren des Heckfensterrollos 12, zusammen mit den Rollobahnmitteln 77 aus dem Auslaufsschlitz 11 heraus bzw. in diesen hinein.

Unterhalb der Hutablage 9 ist an dieser ein Sockel 85 befestigt, der eine Längsnut 86 enthält, in der eine Wickelwelle 87 drehbar gelagert ist. Hierzu ist der Sockel an einem Ende mit einem Lagerstück 88 und an dem anderen Ende mit einem Getriebemotor 89 versehen, auf dessen Ausgangswelle die Wickelwelle 87 drehfest sitzt und durch diese gelagert ist.

An der Wickelwelle 87 ist mit einer Kante das Rollobahnmittel 77 befestigt.

An der Unterseite des Zugstabs 83 sind neben der Führungsnut 84 zwei Lagerböcke befestigt, von denen aus Darstellungsgründen in Fig. 8 lediglich der Lagerbock 90 gezeigt ist. Zwischen den Lagerböcken 90 ist eine weitere Wickelwelle 91 drehbar gelagert. Die Wickelwelle 91 ist rohrförmig und beherbergt in ihrem Inneren einen Federmotor 92 in Gestalt einer Schraubenfeder. Die Schraubenfeder ist in der gleichen Weise wie die Schraubenfeder 27 einends mit der Wickelwelle 91 drehfest verbunden, während ihr anderes Ende unbeweglich mit dem Lagerbock 24 verbunden ist.

Auf diese Weise wird das Rollobahnmittel 77 zwischen der Wickelwelle 87 und der Wickelwelle 91 gespannt gehalten, wobei für die Vorspannung der Federmotor 92 sorgt.

An dem Sockel 85 befinden sich im Abstand zueinander zwei Winkelgetriebe 93 und 94. Das Winkelgetriebe 94 weist eine Ausgangswelle 95 auf, auf der drehfest der Schwenkhebel 82 sitzt. Eingangsseitig ist an das Winkelgetriebe 94 ein Elektromotor 96 angeschlossen, damit die Ausgangswelle 95 wahlweise in Umdrehungen versetzt werden kann. Eine Kuppelwelle 97 verbindet eine Verlängerung der Eingangswelle des Winkelgetriebes 94 mit dem Eingang des Winkelgetriebes 93.

Auch das Winkelgetriebe 93 weist eine Ausgangs- oder Lagerwelle 99 auf, an der drehfest der Schwenkhebel 81 angebracht ist. Die Wellen 95 und 99 liegen parallel zueinander und rechtwinklig zu der Längserstreckung der Wickelwelle 87. Sie drehen sich jeweils in entgegengesetzte Richtungen.

Zur Erläuterung der Funktionsweise des Heckfensterrollos 12 sei angenommen, dass sich die Schwenkhebel 81 und 82 in ihrer Ruhestellung befinden, in der sie etwa parallel zu der Wickelwelle 87 liegen. Die Wickelwelle 87 ist so gedreht, dass die Rollobahnmittel 77 bis zu der Verbindungsstelle 80 auf der Wickelwelle 87 aufgewickelt sind. Der Rollobahnabschnitt 79 ist damit im wesentlichen auf der Wickelwelle 91 aufgewickelt.

Wenn ausgehend hiervon der Motor 96 in Umdrehungen versetzt wird, werden die Schwenkhebel 81 und 82 gegensinnig aufgerichtet, wobei sie zunächst die auf dem Auslaufschlitz 11 liegende Zugstange 83 anheben und in Richtung auf die Dachhinterkante 7 führen. Der Getriebemotor 89 ist ausgeschaltet, und aufgrund der Bewegung des Zugsstabs 83 von Wickelwelle 87 weg, wickelt sich der Rollobahnabschnitt 79 von der Wickelwelle 91 ab, gegen die Wirkung des Federmotors 92. In der Endlage des Zugstabs 83 verläuft dieser wie Figur 6 zeigt, knapp unterhalb der Dachhinterkante 7, und ein Rechteck entsprechend der Breite des Zugstabs 83 wird durch den Rollobahnabschnitt 79 abgeschattet.

Wenn der Benutzer eine stärkere Abschattung als entsprechend der Lichtdurchlässigkeit des Rollobahnabschnittes 79 wünscht, schaltet er den Getriebemotor 89 ein, der daraufhin die Wickelwelle 87 dreht. Dadurch wird der Rollobahnabschnitt 78 von der Wickelwelle 87 abgelassen, während der Federmotor 92 dafür sorgt, im gleichen Maße den Rollbahnabschnitt 79 aufzuwickeln. Die Endlage wird erreicht, wenn die Verbindungsstelle 80 an der Wickelwelle 87 angekommen ist. Beim Erreichen dieses Zustands, der durch Schalter abgefühlt werden kann, wird der Getriebemotor 89 automatisch stillgesetzt.

Die Heckscheibe wird nunmehr durch den Rollobahnabschnitt 78 abgeschattet, der obendrein eine trapezförmige Annäherung der Fenstergeometrie zulässt.

Zum Einfahren wird zunächst durch Einschalten des Getriebemotors 89 ein Zustand hergestellt, in dem der Rollobahnabschnitt 78 vollständig auf der Wickelwelle 87 aufgewickelt ist. Nach Erreichen dieses Zustands wird der Getriebemotor 96 im Sinne eines Einschwenkens der Hebel 81 und 82 in Gang gesetzt.

Es ist zu beachten, dass sämtliche Zeichnungen schematisch sind, und keineswegs maßstäblich. Wenn dennoch der Abstand zwischen den Lagerachsen 95 und 99 kleiner ist, als es der Summe der beiden Schwenkhebel 81 und 82 entspricht, ist es ohne weiters möglich, die beiden Schwenkhebel 81 und 82 in getrennten Nuten laufen zu lassen, so dass ihre Enden nicht miteinander kollidieren.

Abgesehen von den gezeichneten Schwenkhebeln sind auch Lösungen denkbar, bei denen die beiden Schwenkhebel 81 und 82 jeweils durch Kniehebel ersetzt sind. Der untere Arm jedes Kniehebels ist drehfest auf der Welle 95 bzw. 99 befestigt, während der obere Arm an der Zugstange 83 anscharniert ist. Die beiden Arme jedes Kniehebels sind durch ein Kniehebelscharnier miteinander verbunden.

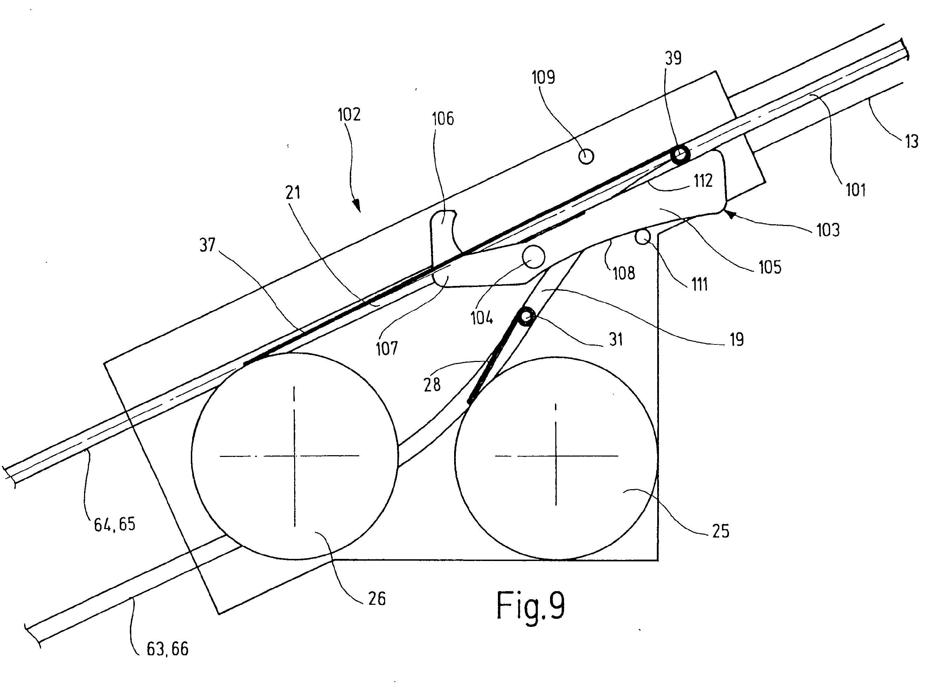

Fig. 9 zeigt vereinfacht eine alternative Ausführungsform für die Führungsmittel zum Führen der Zugstäbe 31 und 38 bei dem Ausführungsbeispiel nach den Fig. 1 bis 5.

Während bei dem Ausführungsbeispiel, gemäß den Figuren 2 und 5, in jeder Führungsschiene 13 zwei Führungsnuten 19, 21 enthalten sind, die über die gesamte Länge durchlaufen, weist das Ausführungsbeispiel nach Figur 9 je Seite des Fensterrollos 12 nur noch eine Führungsnut 101 in der Führungsschiene 13 auf. An dem wickelwellenseitigen Ende geht die Führungsschiene 13 in eine Weiche 102 über, in der sich die Führungsnut 101 in die beiden Führungsnuten 19 und 21 aufteilt. In Verlängerung der beiden Führungsnuten 19 und 21 münden wie bei dem Ausführungsbeispiel nach Fig. 5 die Führungsrohre 63...66 in der sinngemäß entsprechenden Weise.

Bei dem gezeigten Ausführungsbeispiel läuft die Führungsnut 21 im wesentlichen gerade durch und mündet ohne Bogen in die Führungsnut 101, während die Führungsnut 19 den Abzweig aus der Führungsnut 101 darstellt und von der Seite her einmündet.

Um die Zugstäbe 31 und 38 jeweils in die richtige Führungsnut 19 bzw. 21 einlaufen zu lassen, ist eine schwenkbar gelagert Weichenzunge 103 vorhanden. Die Weichenzunge 103 ist bei 104 schwenkbar um eine Achse gelagert, die parallel zu den Achsen der beiden Wickelwellen 25 und 26 liegt. Die Achse 104 befindet sich auf dem Herzstück der Weiche 102 unmittelbar bevor sich die beiden Nuten 19 und 21 vereinigen.

Die Weichenzunge 103 stellt einen zweiarmigen Hebel mit einem ersten Abschnitt 105 und einem zweiten einen Haken 106 tragenden Abschnitt 107 dar.

Die Funktion der Weiche ist wie folgt:

In der Ruhestellung, wenn beide Rollobahnen 28 und 37 eingefahren sind, liegt die Zugstange 38 in dem Haken 106 und verschwenkt die Weichenzunge 105 bezogen auf Fig. 9 in Gegenuhrzeigersinne. Die Verschwenkung reicht aus, damit der Abschnitt 105 mit seiner Führungsfläche 108 den bogenförmigen Verlauf am Übergang von der Nut 19 zu der Nut 101 ergänzt. In dieser Stellung liegt der Abschnitt 105 an einem Anschlag 109 an.

Der Zugstab 31 kann nun über das betreffenden Schubglied 68 oder 69, das über das Führungsrohr 63 bzw. 66 zugeführt wird, von der Wickelwelle 25 weggeschoben werden. Dabei kommt der Zugstab 31 nach einem Stück des Wegs aus der Führungsnut 19 in die gemeinsame Führungsnut 75.

Beim Einfahren läuft der Zugstab 31 an der Führungsfläche 108 entlang und wird hierdurch im weiteren Verlauf in die Nut 19 zurückgebracht.

Beim Ausfahren der Rollobahn 37 bewegt sich der Zugstab 38 aus dem Haken 106 weg, so dass unter der Wirkung einer nicht weiter gezeigten Feder die Weichenzunge 103 mit ihrer Führungsfläche 108 an einem Anschlag 111 anliegt. In dieser Stellung verschließt eine Führungsfläche 112, die der Führungsfläche 105 im wesentlichen gegenüber liegt, den Einlauf in die Führungsnut 19.

Figur 9 veranschaulicht den Zustand unmittelbar nachdem die Zugstange 38 in die Führungsnut 101 eingelaufen ist, bzw den Zustand unmittelbar bevor die Zugstange 38 beim Einfahren die Einmündung der Führungsnut 19 passiert.

Die Rollobahn 37 kann jetzt wie zuvor beschrieben aus- und auch wieder eingefahren werden. Die Weichenzunge 105 sorgt dafür, dass nach dem Passieren der Verzweigungsstelle der Zugstab 38 in der richtigen Führungsnut 21 zu liegen kommt.

Die Fensterrollos sind in Verbindung mit einer Heckscheibe gezeigt. Es versteht sich jedoch, dass die Fensterrollolösung auch bei jedem anderen Fenster eines Pkw verwendet werden kann.

Ein Fensterrollo ist mit Rollobahnmitteln versehen, die im ausgefahrenen Zustand jeweils unterschiedliche Grade der Lichtdurchlässigkeit an dem Fenster ermöglichen. Hierzu können die beiden Rollobahnen entweder auf getrennte Wickelwellen aufgewickelt sein und sich gleichsinnig von demselben Ursprungsort aus ausbreiten oder die beiden Rollobahnen sind aneinander angesetzt und werden nach dem Aufspannen nach Art eines Films vor dem Fenster bewegt. In beiden Fällen werden zwei Wickelwellen verwendet, wobei in einem Falle die beiden Wickelwellen unmittelbar nebeneinander gelagert sind, während im anderen Falle die Wickelwellen beim Aufspannen des Rollos voneinander separiert werden.

## Patentansprüche

1. Fensterrollo (12) zum Regulieren des Lichteintritts durch ein Fenster in einen Innenraum des Kraftfahrzeugs, insbesondere Heckfensterrollo,
mit Rollobahnmitteln (28,37,77), die in drei unterschiedliche Betriebszustände zu bringen sind, wobei in dem ersten Betriebszustand keinerlei Abschwächung des Lichteinritts stattfindet, in dem zweiten Betriebszustand eine Abschwächung des in den Innenraum eintretenden Lichts erfolgt und in dem dritten Zustand eine Abschwächung erfolgt, die sich von dem ersten und dem zweiten Zustand unterscheidet,
mit Antriebseinrichtungen (27,54,89,92), die dazu eingerichtet sind, die Rollobahnmittel (28,37,77) aus einem Betriebszustand in einen anderen Betriebszustand zu bringen, und
mit Verstaumitteln (26,28,87,91) zum Aufbewahren der Rollobahnmittel (28,37,77) in wenigstens einem Betriebszustand.

2. Fensterrollo nach Anspruch 1, **dadurch gekennzeichnet, dass** die Rollobahnmittel (28,37,77) zwei voneinander separierte Rollobahnen (28,37) umfassen.

3. Fensterrollo nach Anspruch 1, **dadurch gekennzeichnet, dass** die Rollobahnmittel (28,37,77) zwei Rollobahnen (78,79) umfassen, die längs einer Kante (80) miteinander verbunden sind.

4. Fensterrollo nach Anspruch 2 oder 3, **dadurch gekennzeichnet, dass** die eine Rollobahn (28,37,78,79) aus einem Gewirke oder einer gelochten Folie besteht.

5. Fensterrollo nach Anspruch 2 oder 3, **dadurch gekennzeichnet, dass** eine der Rollbahnen (28,37,78,79) im Wesentlichen vollständig lichtundurchlässig ist.

6. Fensterrollo nach Anspruch 2 oder 3, **dadurch gekennzeichnet, dass** eine der Rollobahnen (28,37,78,79) auf der von dem Innenraum des Fahrzeugs wegweisenden Seite metallisiert ist.

7. Fensterrollo nach Anspruch 1, **dadurch gekennzeichnet, dass** den Rollobahnmitteln (28,37,77) Führungsmittel (13,81,82) zugeordnet sind, um die Rollobahnmittel (28,37,77) im aufgespannten Zustand zu halten.

8. Fensterrollo nach Anspruch 7, **dadurch gekennzeichnet, dass** die Führungsmittel (13,81,82) zwei Führungsschienen (13) umfassen, die seitlich neben den Rändern der ausgefahrenen Rollobahn (28,37) verlaufen.

9. Fensterrollo nach Anspruch 7, **dadurch gekennzeichnet, dass** jede Führungsschiene (13) zumindest an einem den Wickelwellen (25,26) benachbarten Ende zwei Führungsnuten (19,21) aufweist und dass jede Rollobahn (28,37) der Rollobahnmittel (28,37,77) mit einer eigenen Zugschiene (31,38) versehen ist die endseitig in einem Paar von Führungsnuten (19,21) geführt sind.

10. Fensterrollo nach Anspruch 1, **dadurch gekennzeichnet, dass** die Führungsmittel (13,76) ein Paar erster Führungsnuten (19), die seitlich der aufgespannten ersten Rollobahn (28) verlaufen und der Führung des ersten Zugstabs (31) dienen, und ein Paar zweiter Führungsnuten (21) bilden, die seitlich der aufgespannten zweiten Rollobahn (37) verlaufen und der Führung des zweiten Zugstabs (39) dienen.

11. Fensterrollo nach Anspruch 1, **dadurch gekennzeichnet, dass** die Führungsmittel (13,76) ein Paar erster Führungsnuten (19), die ein Stück weit seitlich der aufgespannten ersten Rollobahn (28) verlaufen und der Führung des ersten Zugstabs (31) dienen, und ein Paar zweiter Führungsnuten (21) bilden, die ein Stück weit seitlich der aufgespannten zweiten Rollobahn (37) verlaufen und der Führung des zweiten Zugstabs (39) dienen, und dass die ersten Führungsnuten (19) und die zweiten Führungsnuten (21) in eine zugehörige Weiche (102) einmünden, von der aus jeweils nur eine Führungsnut (101) weiterführt, die sich längs der betreffenden Fensterkante erstreckt.

12. Fensterrollo nach Anspruch 9, **dadurch gekennzeichnet, dass** die Zugschienen (31,38) längenveränderlich ausgeführt sind.

13. Fensterrollo nach Anspruch 9, **dadurch gekennzeichnet, dass** jede Rollobahn (28,37) an einer Kante (29,38), die beim Ändern des Betriebszustands sich längs eines im wesentlichen gestreckten Weges bewegt, mit einer Zugschiene (31,38) versehen ist.

14. Fensterrollo nach Ansprüchen 1 und 9, **dadurch gekennzeichnet, dass** die Antriebseinrichtung (27,54,89,92) wenigstens einen Getriebemotor (54) umfasst, durch den ein biegsames linienförmiges Schubglied (68,69) wahlweise in Längsrichtung bewegbar ist, von dem ein Ende dazu vorgesehen ist, mit einem Ende der Zugschiene (31,38) zusammenzuwirken.

15. Fensterrollo nach Anspruch 14, **dadurch gekennzeichnet, dass** die Antriebseinrichtung (27,54,89,92) einen Getriebemotor umfasst und dass zwei linienförmige biegsame Schubglieder (68,69) vorgesehen sind, die durch den Getriebemotor (54) in entgegengesetzten Richtungen bewegbar sind, wobei das eine Ende eines Schubgliedes (68) mit einem Ende der Zugschiene (31) einer Rollobahn (28) und das andere Ende mit einem Ende der Zugschiene (38) der Rollobahn (37) zusammenwirkt, und dass mit den Enden der Zugschiene (31,38) einer Rollobahn (28,37) zwei Schubglieder (68,69) zusammenwirken.

16. Fensterrollo nach Anspruch 14, **dadurch gekennzeichnet, dass** die Schubglieder (12) angenähert zylindrische Gebilde sind, die mit einer Verzahnung (71) auf der Außenseite versehen sind.

17. Fensterrollo nach Anspruch 16, **dadurch gekennzeichnet, dass** die Verzahnung (71) von einer auf der Außenseite schraubenförmig verlaufenden Rippe gebildet ist.

18. Fensterrollo nach Anspruch 14, **dadurch gekennzeichnet, dass** die Schubglieder (68,69) mit dem Getriebemotor (55) formschlüssig zusammenwirken.

19. Fensterrollo nach Anspruch 1, **dadurch gekennzeichnet, dass** für jede Rollobahn (28,37) eine Wickelwelle (25,26) vorgesehen ist, an der die betreffende Rollobahn (28,37) mit einer Kante befestigt ist.

20. Fensterrollo nach Anspruch 19, **dadurch gekennzeichnet, dass** jeder Wickelwelle (25,26) ein eigener Federmotor (27) zugeordnet ist, durch den die Wickelwelle (25,26) im Sinne des Aufwickelns der betreffenden Rollobahn (25,26) federvorgespannt ist.

21. Fensterrollo nach Anspruch 19, **dadurch gekennzeichnet, dass** zumindest eine der Wickelwellen (25,26) endseitig in einem Lagerbügel (24) gelagert ist, der bezüglich einer Achse in dem Fahrzeug an einem fahrzeugfesten Sockel (49) schwenkbar gelagert ist, wobei die Achse rechwinklig zur Drehachse der betreffenden Wickelwelle (25,26) liegt.

22. Fensterrollo nach Anspruch 1, **dadurch gekennzeichnet, dass** der Lagerbügel (24) durch Federmittel (51,52) in eine zentrierte Stellung elastisch vorgespannt ist.

23. Fensterrollo nach Anspruch 1, **dadurch gekennzeichnet, dass** die Führungsmittel (13,81,82) zwei Schwenkhebelmittel (81,82) umfassen, die derart gelagert und angeordnet sind, dass sie in dem ersten Betriebszustand der Rollobahnmittel (28,37,77) Geraden definieren, die im wesentlichen parallel zueinander liegen.

24. Fensterrollo nach Anspruch 23, **dadurch gekennzeichnet, dass** die Schwenkhebelmittel (81,82) von zwei gegensinnig schwenkenden starren Hebeln (81,82) gebildet sind.

25. Fensterrollo nach Anspruch 23, **dadurch gekennzeichnet, dass** die Schwenkhebelmittel (81,82) von zwei gegensinnig schwenkenden Kniehebeln gebildet sind, wobei sich jeder Kniehebel aus zwei Kniehebelarmen zusammen setzt, die über ein Kniehebelscharnier miteinander verbunden sind.

26. Fensterrollo nach Anspruch 23, **dadurch gekennzeichnet, dass** die Schwenkhebelmittel (81,82) eine Auszugsstange (83) tragen, die durch die Schwenkhebelmittel (81,82) zwischen zwei Betriebsstellungen hin und her bewegbar ist, wobei die Schwenkhebelmittel (81,82) die einzigen Mittel sind, die die Auszugsstange (83) bei der Bewegung zwischen den zwei Betriebsstellungen tragen, und dass die Schwenkhebelmittel (81,82) senkrecht zu einer Ebene in der sie sich bewegen im wesentlichen biegesteif sind.

27. Fensterrollo nach Anspruch 23, **dadurch gekennzeichnet, dass** die Verstaumittel (26,28,87,91) zwei Wickelwellen (87,91) umfassen, von denen die eine in der Auszugstange (83) und zu dieser parallel gelagert ist, während die andere Wickelwelle (87,91) sich in der Nähe der Schwenklager (93,94) der Schwenkhebelmittel (81,82) befindet, wobei die Schwenkachse (95,99) der Schwenkhebelmittel (81,82) rechtwinklig zu Drehachse der Wickelwelle (87) liegt.

28. Fensterrollo nach Anspruch 27, **dadurch gekennzeichnet, dass** einer der beiden Wickelwellen (87,91), vorzugsweise der Wickelwelle (91) an der Auszugstange (83), ein Federmotor (92) und der anderen Wickelwelle (87) ein Getriebemotor (89) zugeordnet ist.
